(19) **Europäisches Patentamt / European Patent Office / Office européen des brevets**

(11) **EP 2 475 554 B1**

(12) **EUROPEAN PATENT SPECIFICATION**

(45) Date of publication and mention
of the grant of the patent:
**05.11.2014 Bulletin 2014/45**

(21) Application number: **10760051.2**

(22) Date of filing: **07.09.2010**

(51) Int Cl.:
*B60R 19/26* (2006.01)   *B60R 19/34* (2006.01)

(86) International application number:
**PCT/IB2010/054012**

(87) International publication number:
**WO 2011/030281 (17.03.2011 Gazette 2011/11)**

(54) **A TWO-STAGE FRONT STRUT AND A MOTOR VEHICLE EQUIPPING THE FRONT STRUT**

ZWEISTUFIGE VORDERSTREBE UND KRAFTFAHRZEUG MIT DER VORDERSTREBE

LONGERON AVANT EN DEUX PARTIES ET VÉHICULE À MOTEUR ÉQUIPÉ DU LONGERON AVANT

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **08.09.2009 IT RM20090454**

(43) Date of publication of application:
**18.07.2012 Bulletin 2012/29**

(73) Proprietor: **Impero, Pasquale**
**80013 Casalnuovo di Napoli (NA) (IT)**

(72) Inventor: **Impero, Pasquale**
**80013 Casalnuovo di Napoli (NA) (IT)**

(74) Representative: **Dall'Olio, Christian et al**
**INVENTION S.r.l.**
**Via delle Armi, 1**
**40137 Bologna (IT)**

(56) References cited:
**EP-A- 0 546 352      EP-A- 1 787 870**
**DE-A1- 4 239 460     US-A1- 2007 176 442**

**Description**

TECHNICAL FIELD

The invention relates to the motor vehicle sector, and in particular to systems for absorbing impact energy on the front part of the motor vehicle. The invention specifically relates to a novel front strut and a motor vehicle equipping the novel front strut.

BACKGROUND ART

As is known, the front strut is an element of the vehicle deck having the task of satisfying the need for energy absorption in a case of high-speed impact, and of satisfying the requirements of rigidity and resistance of the deck it is equipped on.

The prior art comprises front struts which have always been conceived and designed as a single component, which extends from the front plates (for fixing to front crash boxes) and terminates in the lower parts of the flame damper. A standard or known front strut made in this way is for example illustrated in figure 2b of the present patent application, and is illustrated purely for purposes of comparison. Figure 2b shows the front plate 2 for fixing the front strut 1 to the crash box (the crash box is not illustrated in the figure).

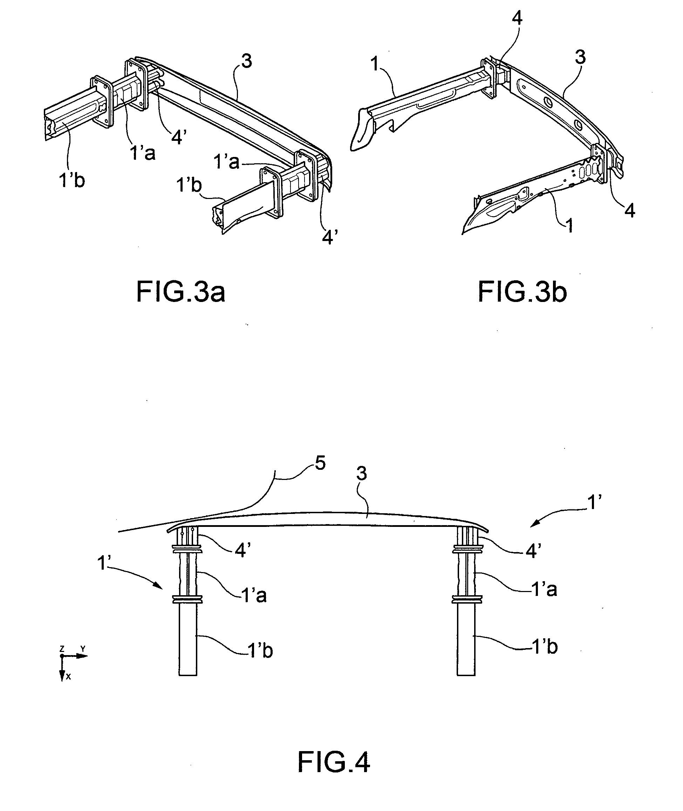

Also known is a sacrificial crosspiece 3 shown for example in figure 3b (also relating to the prior art) which connects the two crash boxes 4,4 of the two standard front struts 1, 1.

However, this type of standard front strut 1 exhibits numerous drawbacks which have led the inventor of the present patent application to introduce a completely novel concept for a front strut for motor vehicles, the concept being based on a principle of two different stages of deformation, for which reason it has been termed a "two-stage strut" by the inventor himself.

Some of the drawbacks in the prior art will now be briefly illustrated.

Other drawbacks of the prior art will be taken into consideration after a detailed description of the object of the present invention has been made, denoting its advantages; this is in order not to reveal the invention in the present introductory part of the description.

Firstly, the standard system exhibits no flexibility with regard to adapting the vehicle deck to any future changes in norms and standards, restyling and/or installing of new engines.

Worthy of note is the fact that the larger motor vehicle manufacturing companies aim at drastically reducing the times and costs of developing vehicles. These aims are due to two requirements:

  shortening of the lifetime of new products placed on the market, with a consequent reduction in design and development times of the products themselves;

  an ever-increasing need, felt by all automobile manufacturers, to optimise vehicle development costs by not modifying a greatest possible number of already-existing components (carry-over).

For these reasons all automobile manufacturers design new models, sometimes very different, with the absolute constraint of possibly re-utilising the mounted deck or at least the basic deck of vehicles already in production.

A change in the norms and standards, for example relating to the energy to be absorbed by the single components (bumper, struts, crash box) would force the manufacturer to review the design of the whole standard strut and possibly also that of the deck or even more, as the strut is connected (welded) to the body.

A further disadvantage of standard struts is that in a case of speed impact, even at little more than 16 km/h, the prior art would lead to the necessary replacement of the sacrificial crosspiece (with the crash box) and the struts. The present invention avoids the need, in these cases, for replacing the whole strut.

Further drawbacks of the prior art will more evidently emerge from a comparison with the following detailed non-limiting description of the present invention.

Document EP 0546352 discloses a front body section of a vehicle, with a front strut according to the preamble of claim 1, which is provided with a front-side member and a crush box. The crush box includes a front section and a rear section, which are disposed in front of the front-side member so as to be axially aligned and connected thereto. An upper plate, a lower plate, an outer plate, and an inner plate, all of which form the front section, are prepared so as to provide a lower level of total plastic characteristic, when under load, than those plate members which form the rear section. The crush box thereby exhibits a total plastic characteristic, when under load, in two stages.

Document DE 42 39 460 discloses an absorbing device which has a hollow body made of plastically deformable material fitted between the bumper and the body frame. The hollow body is rotationally symmetrical about the longitudinal axis laying in the impact direction. In the event of a crash the hollow body is compressed and deformed such that energy is absorbed. The adsorbing device consists of a small number of parts, so keeping production costs low. The total weight is small, with no danger of rattling.

Document EP 1 787 870 discloses a vehicle impact energy absorbing structure. The structure comprises: a pair of longitudinal side struts, a cross-member for connecting the struts which integrally forms a central section and a pair of side end sections inclined with respect to the central section, and a pair of support members of the crash-box type arranged each between a respective strut and a respective side end section of the cross-member. The cross-member has a box-shaped structure comprising a profiled piece with a cross-section which is open towards the struts and the crash-boxes and with a closing wall connected to the profiled piece so as to close the cross-section thereof. Moreover, in the zone of the side end sections of the cross-member, the closing wall of the cross-member is firmly connected to the crash-boxes (16) while it is releasably connected to the profiled piece.

SUMMARY OF THE INVENTION

Therefore, an aim of the present invention is in general to provide a front strut for motor vehicles, termed a two-stage front strut, as well as to provide a motor vehicle provided with a front strut of the invention, such that the automobile manufacturing company can avail of a broad restyling option range thanks to the fact of being able freely to design a front bumper structure (defined herein below) with greater impact energy absorption and transferring the function of satisfying the requisites of rigidity and overall and local resistance to another part of the vehicle (better defined in the following) which is the part comprising the vehicle deck.

BRIEF DESCRIPTION OF THE DRAWINGS

Other aspects of the present invention, as well as the exact reason for using the term "two-stage front strut", not in common use in the sector technology, indeed coined by the inventor himself, will better emerge from the following detailed non-limiting and non-constraining description that follows of the object of the present invention, in which:

Figure 1 shows a diagram of the division of the strut into two "stages", each of which performs its own task with greater efficiency, with regard to the absorption of kinetic energy resulting from an impact; in which figure 1a shows the ideal composition of a traditional strut with a replacement of the part of interest (i.e. the front end of the traditional strut) with the front component of the two-stage strut of the invention (figure 1b); obviously this description is purely generic and serves only to introduce the concept of the invention;

Figure 2a is a perspective view of the real structure of the two-stage strut of the present invention, in a possible first embodiment thereof;

Figure 2b illustrates, for the purposes of comparison, a standard strut belonging to the prior art;

Figure 3a is a perspective view of the assembly constituted by the two two-stage front struts of the present invention and the sacrificial crosspiece, as well as the crash boxes each mounted between the sacrificial crosspiece and one of the two two-stage front struts;

Figure 3b is a similar view to that of figure 3a, in a case of a traditional sacrificial crosspiece-crash box-struts assembly, with standard struts formed by a single piece belonging to the prior art;

Figure 4 is a passive safety assessment impact diagram in the case of the assembly of figure 3a;

Figure 5 is the passive safety assessment impact diagram of figure 4 in four successive time instants (5ms, 10 ms, 15 ms, 50 ms); this simulation and practical tests show that the two-stage strut undergoes no visible plastic deformation (greater than 2%) either in its front part (component) or in its rear part (component);

Figure 6 is a high-velocity impact diagram (56 km/h) in accordance with US standards, applied to the assembly of the present invention, shown in figure 3a;

Figure 7 shows the progression of the deformations in four successive time instants (5ms, 10 ms, 15 ms, 20 ms) in a high-speed impact (according to the diagram of figure 6);

Figure 8 shows two possible half-shells (smooth on the left; with bosses on the right) for forming two respective front components (see figure 10) of the two-stage front strut of the present invention (second possible embodiment of the invention);

Figure 9 isolates two possible front components (1'a) of the two-stage strut of the first embodiment (shown in figure 2a); note that in figure 2a the front component (1'a) effectively exhibits bosses but that in a possible alternative (variant) of the first embodiment it might be smooth as in figure 9 on the left;

Figure 10 shows two possible alternatives/variants for the second embodiment of the front component of the two-stage strut, object of the present invention;

Figure 11 is a perspective view of a further possible embodiment (third embodiment) in two constructional variants (with the cell surfaces either with bosses or smooth) for the front component of the front two-stage strut of the present invention.

BEST MODE FOR CARRYING OUT THE INVENTION

The present invention will now be described in detail exclusively by way of non-limiting and non-constraining example, with reference to the accompanying figures of the drawings, with the sole aim of enabling an expert in the sector to actuate the invention.

Therefore, any variant which is obvious to the normal technical expert in the sector is to be considered included in the ambit of protection as set down in the appended claims, which cover all of the technically equivalent possibilities.

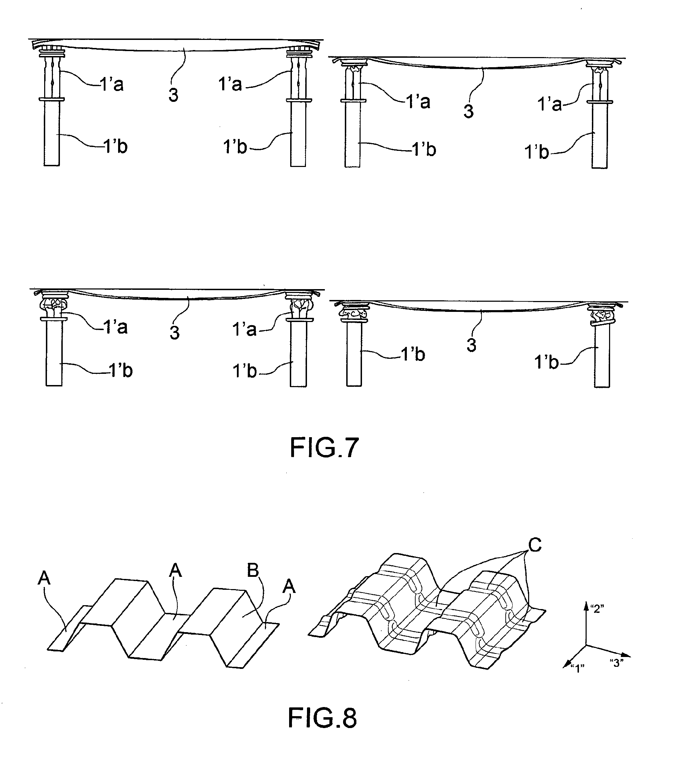

The novel concept of the present invention consists in realising a front strut in two parts located in series in a longitudinal direction (axis of the strut) and connected by means of bolted plates or by other removable fastening means. For this reason, and due to the possibility of discomposing the deformation in case of an impact into two stages (see below), the front strut for motor vehicles has been called a "two-stage front strut". Obviously, as results from the following description, in the case of a passive safety assessment impact (i. e. a low-speed impact) the second stage of deformation which would involve the front component of the strut is not illustrated. The second stage of the deformation becomes involved in a case of a high-speed impact (see the description of figure 7). A third stage of deformation, for very high-energy impacts, is not considered herein as it is substantially outside the ambit of the present invention and would also involve the posterior component of the strut of the invention.

Returning to the present invention, the discomposing of the strut into two parts in a longitudinal direction enables differentiation of thicknesses/materials/shape of the front part of the strut, which is realised for functioning during an impact, from the rear part, which has to satisfy overall and local requisites of rigidity/resistance. In this way it is possible to create a front sacrificial structure with greater efficiency.

In this context, the use of a two-stage strut brings indisputable advantages in terms of new-vehicle design times and reduction of costs thereof, offering manufacturers the possibility of using pre-existing decks for developing any new product.

A system of this type exhibits a high degree of flexibility in terms of adapting the deck to any changes in norms and standards, to re-styling needs and/or the introduction of new engines. In these cases, i.e. the change requirements stated above, only the front part of the two-stage strut has to be adapted (together with the crash box and the sacrificial crosspiece, the strut constitutes the above-named "front sacrificial structure").

The discomposing of the strut into two stages (components), each of which is designed to perform its own task with greater efficiency, exhibits the following novel contents:

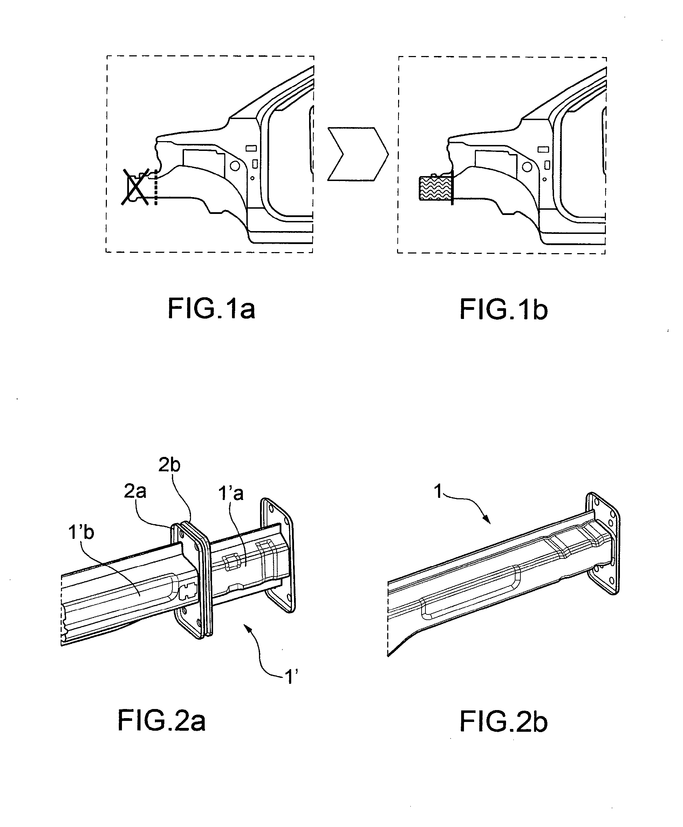

Passive safety assessment: possibility of being subjected to low-level damage even at speeds above those set out in the norms and standards: the two-stage strut would damage the front part (denoted by L in figure 1) without touching the rest of the structure, the geometry of the suspension, etc. This front would simply be replaced.

High-speed impacts: it is clear that there is a considerable gain in terms of absorbed energy and axiality of the impact, as the front part of the strut can be designed only for this aim.

Costs and quality: struts now present on the market for satisfying the requisites of energy absorption and rigidity with a single longitudinal element having a geometry exhibiting wide variations in the transversal section. These variations of section make the stamping process more expensive and complex. The two-stage strut, constituted by two elements in series, requires smaller dies. Further, the stamping process is more precise on smaller components than the single component. The response of the geometry of the stamped object to the mathematical design needs for the components is fundamental for guaranteeing that the behaviour of the vehicle during impact is the one responding to designed requirements.

Speed of development: a competitive market such as automobiles demands vehicles free of stylistic compromises and at low cost: the use of the two-stage strut enables use of decks and mounted decks which are already in existence, by designing the terminal part of the strut on the basis of safety requirements, style and carry-over to be conserved.

Competitivity: the possibility of modulating the length of the first part of the strut with the length of the second part, obtaining immediately and at no cost solutions for safety reasons, packaging needs and especially style requirements.

Figure 2a illustrates the strut of the present invention, which is constituted by two components 1'a, 1'b in a longitudinal direction and figure 2b illustrates a standard strut constituted by a single component 1. The front part 1'a of the two-stage strut 1' has the task of absorbing energy by deforming plastically during the impact. The part 1'a is constructed as described herein below. The rear part 1'b of the two-stage strut has the task of respect the requisites of rigidity and resistance of the body of the vehicle. The technical solution proposed by the invention enables separation of the two functions of the two-stage strut (energy absorption and lending rigidity/resistance to the body) and transferring them to two structural elements located in series.

Figure 3a illustrates the two-stage front strut together with the sacrificial crosspiece 3. The elements denoted in figure 3a with numbers 1'b, 1'a, 4 are respectively the rear part of the two-stage strut, the front part of the two-stage strut and the crash box which has the task of absorbing energy in low-speed impacts (up to 16 km/h). Note how these three elements are located in series. The critical longitudinal force which sets off the collapse of each of the three above-mentioned elements 1'b, 1'a, 4 is denoted by Fc, and the proposed solution functions correctly when the following condition is respected:

$$Fc(1'b) > Fc(1'a) > Fc(4 \text{ or } 4')$$

If the above condition is respected, in a case of an impact, the following will give way, in order : the crash box 4', followed by the front part 1'a of the two-stage strut and then the rear part 1'b of the two-stage strut. The use of the two-stage strut 1' enables designing the front part of the vehicle with the aim of respecting the standards on impacts by the designing of two crash boxes, one destined for energy absorption in low-speed impacts (crash box of the sacrificial crosspiece) and the other crash box 1'a destined to absorb the energy of high-speed impacts (front part 1' of the two-stage strut).

This approach is novel as it has never been used by automobile manufacturers up to now.

A like constructional solution, beyond exhibiting the advantages in above-mentioned design stage, also enables reducing the repair costs of the vehicle. With impacts at speeds of above 16 km/h, in the case of the present solution the sacrificial crosspiece 3 and the front part 1'a of the two-stage strut will be replaced, while in the case of the traditional solution (figure 3b) the sacrificial crosspiece 3 and the whole strut 1 will be replaced. A further burden on repair costs in the prior art is given by the fact that the standard strut 1 is welded to the body, while the front part 1'a of the two-stage strut 1' is simply screwed to the rear part 1'b of the two-stage strut 1' which in turn is welded to the body.

The performance of the proposed solution has been verified in relation to the passive safety assessment (AZT norms) and the USA high-speed impact (56 km/h).

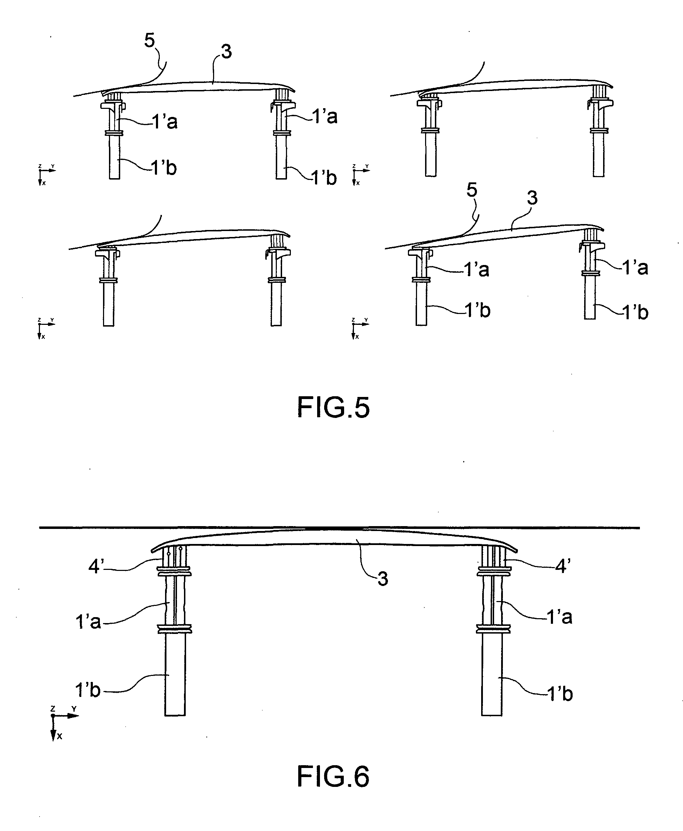

Figure 4 illustrates the diagram of the passive safety assessment (the mass used in the test is schematised by 5) for assembly of the sacrificial crosspiece 3 and the two-stage strut 1'. The strut positively survives the passive safety assessment if it does not undergo plastic deformation. The results of the analysis and the tests are reported in figure 5 in terms of plastic deformation (values above 2%), at four successive time instants. Note from figure 5 that both in the front part 1'a and the rear part 1'b the two-stage strut 1' undergoes no visible plastic deformation.

Figure 6 illustrates the diagram of the high-speed impact (56 km/h) according to the USA norms for the whole sacrificial crosspiece 3 and two-stage struts 1'. The impact can be considered to be overcome when the struts 1' plastically deform axially. Figure 7 reports the results of the calculation and the tests in four successive time instants. Note that the crash box 4' plastically deforms and then the front part 1'a of the two-stage strut, axially, while the rear part 1'b of the two-stage strut is not subject to appreciable deformations.

This deformation order ensures that condition (*) is verified.

Since the deformation occurs in two stages, as explained above, the deformation of the rear part 1'b would occur at still greater speeds, in a third stage, but this is substantially without the ambit of the present invention.

At this point the configuration of the front component 1'a of the two-stage strut 1' needs to be defined.

It is constituted by one or more modular elements (figures 8-11). Each modular element is constituted by two half-shells stamped and coupled by means of welding done at the flat parts of the half-shells, called fins. The coupling of the two half-shells generates closed figures known as cells. Each half-shell is obtained by stamping of a metal sheet and exhibits two or more flat parts (the fins, denoted by A in figure 8) and one or more deep-drawn corrugated parts (denoted by B in figure 8). Each half-shell can exhibit bosses (denoted by C in figure 8) whose function is to guide the plastic deformation and/or to increase the energy required for plastic deformation of the component 1'a. The component 1'a is able to absorb energy by plastically deforming in both direction 1 and direction 2. Direction 1 is parallel to the plane of the fins and perpendicular to the plane identified by the profile of the cells, while direction 2 is perpendicular to the plane of the ribs and contained in the plane identified by the profile of the cells. In accordance with the optimal design solution, the following parameters can be varied:

- thickness of the stamped sheet

- type of material

- dimensions of the front component 1'a

- cell dimension

- cell number

- cell shape

- fin dimension

- boss dimension

- boss shape.

A system of this type with such a high number of parameters but made up of a simple and repetitive element (the stamped half-shell of figure 8) means that the invention can respond to the broadest design needs.

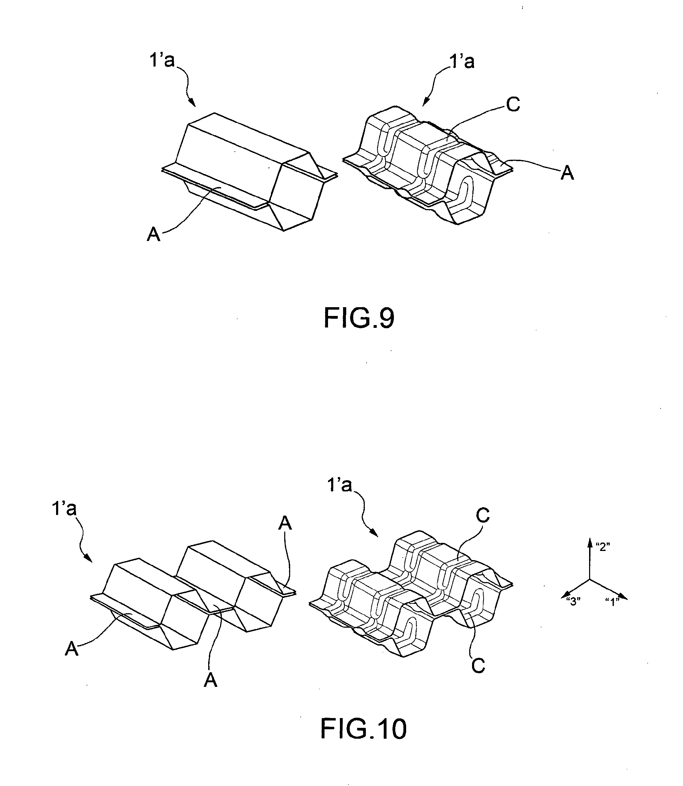

Component 1'a can be mounted in such a way as to generate the deformation of the cells (in the case of impact) in the direction of the axis of the cells (direction 1) or in direction 2 perpendicular to the plane of the fins A. Figure 9 on the right shows the first realisation, first variant (i.e. with the bosses C). Component 1'a is mounted in such a way that the axis of the cell (a single cell in this case) is in the direction of the impact, in figure 2a. Thus the bosses C constitute invitations to deformation. The dimension and shape of the bosses, as above-specified, are among the parameters selectable in order to obtain the optimal design solution.

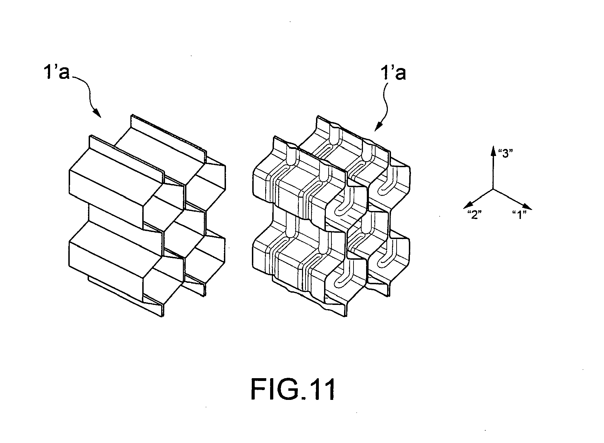

The other solutions illustrated in figures 10 and 11 can also be mounted with axes of the cells in the direction of the impact (parallel to the axis of the strut 1'), or perpendicular to the axis of the strut. The crash boxes 4' can constitute any traditional crash boxes 4', such as the crash boxes 4 of figure 3b, or can have a shape such as the one indicated for component 1'a in figures 9-11, obviously with different design parameters.

Note that the bosses C can be continuous or interrupted.

The number of the cells, which is 1 in figures 3a and 9 for component 1'a, and which is 2 in figure 10, and 5 in figure 11, can be any.

The cells are preferably hexagonal.


## Claims

1. Front strut (1') for motor vehicles, having a longitudinal axis, comprising:

   a front component (1'a) having a front end and a rear end;
   a rear component (1'b) having a front end and a rear end;
   wherein,
   the rear end of the front component (1'a) of the front strut (1') is removably connected to the front end of the rear component (1'b);
   the rear end of the rear component (1'b) of the front strut (1') is weldable to the body or deck of the vehicle;
   the front end of the front component (1'a) is connectable to a respective crash box (4, 4');
   the front component (1'a), adapted to absorb part of the energy in case of impact, but also substantially forms a crash box (1'a);
   and wherein using Fc (4 or 4'), Fc (1'a), Fc (1'b) to indicate the values of the longitudinal critical force that - in case of impact - would cause the collapse of the crash box (4 or 4'), of the first component (1'a) and of the rear component (1'b) respectively, the following relation holds:

# EP 2 475 554 B1

$$Fc\ (4\ or\ 4')< Fc\ (1'a)< Fc\ (1'b)$$

in such a manner that first the crash box (4 or 4'), then the removable and replaceable front component (1'a) of the front strut (1'), and lastly the rear component (1'b) of the front strut (1') yield in succession; **characterised in that** the configuration of the front component (1'a) substantially corresponds to that of a crash box formed by one or more corrugated sheet half-shells coupled to each other at the fins (A) or planes (A) of the half-shells, forming one or more cells preferably hexagonal, wherein the front component (1'a) of the front strut (1') is mounted with the axis of the cells parallel to said longitudinal axis of the front strut (1') or orthogonally to the latter, the surface of said half-shells has continuous or interrupted bosses (C), which form sections predisposed to deform in case of impact if the axis of said cells is parallel to said longitudinal axis of the front strut (1').

2. Front strut (1') for motor vehicles, according to claim 1, **characterised in that** the front component (1'a) is made up of only two half-shells each with only two fins (A) at the ends, the fins (A) being coupled to each other, in such a manner as to generally form only one cell, preferably hexagonal (figures 3a and 9).

3. Front strut (1') for motor vehicles, according to any one of the preceding claims, **characterised in that** the means for removably connecting the front component (1'a) of the front strut (1') to the rear component (1'b) of the same front strut (1'), are represented by a plate (2a) integrally formed at the front end of the rear component (1'b), by a counter-plate (2b) integrally formed at the rear end of the front component (1'a), and by bolts for connecting the plate to the counter-plate.

4. Motor vehicle **characterised in that** it comprises two or more front struts (1') according to any one of the preceding claims, removably connected to the front end thereof, corresponding at the front end of the front component (1'a), to a respective crash box (4 or 4'), wherein the crash box (4 or 4') is a standard crash box (4), or a crash box (4') made up of one or more corrugated sheet half-shells coupled to each other at the fins (A) or planes (A) of the half-shells, forming one or more cells, wherein each crash box (4') is mounted with the axis of the cell or cells, preferably hexagonal, parallel to said longitudinal axis of the front component (1'a) of a front strut (1'), or orthogonally to this axis.

5. Motor vehicle according to claim 4, **characterised in that** the connection between the front component (1'a) of a front strut (1') and the respective crash box (4 or 4') is obtained by means of a bolted plate and counter-plate, the plate being made in a single piece with the front end, of the front component (1'a) and the counter-plate being rigidly connected to the crash box (4 or 4').

6. Motor vehicle according to any one of the preceding claims 4-5 wherein the critical force Fc that causes the collapse of each of the three elements (4, or 4', 1'a, 1'b) in case of impact, is obtained according to the following relation:

$$Fc(4\ or\ 4')<Fc(1'a)<Fc(1'b)$$

hence, in case of impact at a moderately high energy, it is sufficient to replace the front sacrificial structure of the vehicle, defined by the following: sacrificial crosspiece (3), crash box (4, 4') and front components (1'a) of the front struts (1') of the motor vehicle.

**Patentansprüche**

1. Vorderstrebe (1') für Kraftfahrzeuge, die eine Längsachse aufweist, umfassend:

eine vordere Komponente (1'a) mit einem vorderen Ende und einem hinteren Ende;
eine hintere Komponente (1'b) mit einem vorderen Ende und einem hinteren Ende;
wobei
das hintere Ende der vorderen Komponente (1'a) der Vorderstrebe (1') lösbar mit dem vorderen Ende der hinteren Komponente (1'b) verbunden ist;
das hintere Ende der hinteren Komponente (1'b) der Vorderstrebe (1') an die Karosserie oder den Kofferraum

7

des Fahrzeugs schweißbar ist;

das vordere Ende der vorderen Komponente (1'a) mit einer jeweiligen Crashbox (4, 4') verbindbar ist;

die vordere Komponente (1'a) dazu ausgebildet ist, im Falle eines Aufpralls einen Teil der Energie zu absorbieren, aber auch im Wesentlichen eine Crashbox (1'a) bildet;

und wobei die Anwendung von Fc (4 oder 4'), Fc (1'a), Fc (1'b) zum Angeben der Werte der kritischen Längskraft, die im Falle eines Aufpralls ein Kollabieren der Crashbox (4 oder 4') jeweils der ersten Komponente (1'a) und der hinteren Komponente (1'b) bewirken würde, das folgende Verhältnis gilt:

$$Fc\ (4\ oder\ 4') < Fc\ (1'a) < Fc\ (1'b)$$

derart, dass zuerst die Crashbox (4 oder 4'), dann die lösbare und austauschbare vordere Komponente (1'a) der Vorderstrebe (1') und zuletzt die hintere Komponente (1'b) der Vorderstrebe (1') nacheinander nachgeben; **dadurch gekennzeichnet, dass** die Konfiguration der vorderen Komponente (1'a) im Wesentlichen der einer Crashbox entspricht, die aus einer oder mehreren Halbschalen aus Wellblech gebildet ist, die an den Graten (A) oder Ebenen (A) der Halbschalen aneinander gekoppelt sind und eine oder mehrere vorzugsweise hexagonale Zellen bilden, wobei die vordere Komponente (1'a) der Vorderstrebe (1') mit der Achse der Zellen parallel zur Längsachse der Vorderstrebe (1') oder orthogonal zu derselben angebracht ist, wobei die Oberfläche der Halbschalen kontinuierliche oder unterbrochene Buckel (C) aufweist, die Abschnitte bilden, deren Verformung im Falle eines Aufpralls vorgesehen ist, wenn die Achse der Zellen parallel zu der Längsachse der Vorderstrebe (1') ist.

2. Vorderstrebe (1') für Kraftfahrzeuge nach Anspruch 1, **dadurch gekennzeichnet, dass** die vordere Komponente (1'a) aus nur zwei Halbschalen gebildet ist, die jeweils nur zwei Grate (A) an den Enden aufweisen, wobei die Grate (A) aneinander gekoppelt sind, derart, dass sie allgemein nur eine vorzugsweise hexagonale Zelle bilden (Fig. 3a und 9).

3. Vorderstrebe (1') für Kraftfahrzeuge nach einem der vorangehenden Ansprüche, **dadurch gekennzeichnet, dass** das Mittel zum lösbaren Verbinden der vorderen Komponente (1'a) der Vorderstrebe (1') mit der hinteren Komponente (1'b) der Vorderstrebe (1') durch eine Platte (2a), die einstückig am vorderen Ende der hinteren Komponente (1'b) gebildet ist, durch eine Gegenplatte (2b), die einstückig am hinteren Ende der vorderen Komponente (1'a) gebildet ist, und durch Bolzen zum Verbinden der Platte mit der Gegenplatte dargestellt ist.

4. Kraftfahrzeug, **dadurch gekennzeichnet, dass** es zwei oder mehr Vorderstreben (1') nach einem der vorangehenden Ansprüche umfasst, die lösbar mit seinem vorderen Ende verbunden sind und an dem vorderen Ende der vorderen Komponente (1'a) einer jeweiligen Crashbox (4 und 4') entsprechen, wobei die Crashbox (4 oder 4') eine Standardcrashbox (4) oder eine Crashbox (4') aus einer oder mehreren Halbschalen aus Wellblech ist, die an den Graten (A) oder Ebenen (A) der Halbschalen aneinander gekoppelt sind und eine oder mehrere Zellen bilden, wobei jede Crashbox (4') mit der Achse der vorzugsweise hexagonalen Zelle oder Zellen parallel zur Längsachse der vorderen Komponente (1'a) einer Vorderstrebe (1') oder orthogonal zu dieser Achse angebracht ist.

5. Kraftfahrzeug nach Anspruch 4, **dadurch gekennzeichnet, dass** die Verbindung zwischen der vorderen Komponente (1'a) einer Vorderstrebe (1') und der jeweiligen Crashbox (4 oder 4') mittels einer verschraubten Platte und Gegenplatte erlangt wird, wobei die Platte als ein Stück hergestellt ist, wobei das vordere Ende der vorderen Komponente (1'a) und die Gegenplatte starr mit der Crashbox (4 oder 4') verbunden sind.

6. Kraftfahrzeug nach einem der vorangehenden Ansprüche 4 - 5, wobei die kritische Kraft Fc, die das Kollabieren der einzelnen drei Elemente (4 oder 4', 1a, 1b) im Falle eines Aufpralls bewirkt, gemäß der folgenden Beziehung erlangt wird:

$$Fc\ (4\ oder\ 4') < Fc\ (1'a) < Fc\ (1'b)$$

weshalb es im Falle eines Aufpralls bei moderat hoher Energie ausreicht, die vordere Opferstruktur des Fahrzeugs auszutauschen, definiert wie folgt: Opferkreuzverstrebung (3), Crashbox (4, 4') und vordere Komponenten (1'a) der Vorderstreben (1') des Kraftfahrzeugs.

**Revendications**

1. Un longeron avant (1') pour véhicules à moteur, ayant un axe longitudinal, comprenant :

   un composant avant (1'a) ayant une extrémité avant et une extrémité arrière ;
   un composant arrière (1'b) ayant une extrémité avant et une extrémité arrière ;
   dans lequel,
   l'extrémité arrière du composant avant (1'a) du longeron avant (1') est reliée de façon amovible à l'extrémité avant du composant arrière (1'b) ;
   l'extrémité arrière du composant arrière (1'b) du longeron avant (1') est soudable à la carrosserie ou plateforme du véhicule ;
   l'extrémité avant du composant avant (1'a) peut être reliée à une boîte-tampon (4, 4') respective ;
   le composant avant (1'a), destiné à absorber une partie de l'énergie en cas de choc, constitue essentiellement lui aussi une boîte-tampon (1'a) ;
   et dans lequel, en utilisant Fc (4 ou 4'), Fc (1'a), Fc (1'b) pour indiquer les valeurs de la force critique longitudinale qui causeraient - en cas de choc - le fléchissement de la boîte-tampon (4 ou 4'), du premier composant (1'a) et du composant arrière (1'b) respectivement, la relation suivante est vérifiée :

$$Fc~(4~ou~4')~<~Fc~(1'a)~<~Fc~(1'b)$$

   de manière à ce que la première boîte-tampon (4 ou 4'), puis le composant avant (1'a) amovible et remplaçable du longeron avant (1'), et enfin le composant arrière (1'b) du longeron avant (1') cèdent en succession ;
   **caractérisé en ce que** la configuration du composant avant (1'a) correspond essentiellement à celle d'une boîte-tampon formée par une ou plusieurs demi-coques de tôle ondulée accouplées entre elles au niveau des ailettes (A) ou plans (A) des demi-coques, formant une ou plusieurs cellules de préférence hexagonales, où le composant avant (1'a) du longeron avant (1') est monté avec l'axe des cellules parallèle audit axe longitudinal du longeron avant (1') ou orthogonalement à ce dernier, la surface desdites demi-coques présente des bossages (C) continus ou interrompus, qui forment des sections destinées à se déformer en cas de choc si l'axe desdites cellules est parallèle audit axe longitudinal du longeron avant (1').

2. Le longeron avant (1') pour véhicules à moteur selon la revendication 1, **caractérisé en ce que** le composant avant (1'a) est constitué de seulement deux demi-coques, chacune avec seulement deux ailettes (A) aux extrémités, les ailettes (A) étant accouplées entre elles, de manière à former globalement une seule cellule, de préférence hexagonale (figures 3a et 9).

3. Le longeron avant (1') pour véhicules à moteur selon l'une quelconque des revendications précédentes, **caractérisé en ce que** les moyens pour relier de façon amovible le composant avant (1'a) du longeron avant (1') au composant arrière (1'b) de ce même longeron avant (1'), sont constitués par une plaque (2a) formée intégralement au niveau de l'extrémité avant du composant arrière (1'b), par une contre-plaque (2b) formée intégralement au niveau de l'extrémité arrière du composant avant (1'a), et par des boulons destinés à relier la plaque à la contre-plaque.

4. Un véhicule à moteur **caractérisé en ce qu'**il comprend deux ou plus longerons avant (1') selon l'une quelconque des revendications précédentes, reliés de façon amovible au niveau de leur extrémité avant, correspondant à l'extrémité avant du composant avant (1'a), à une boîte-tampon (4 ou 4') respective, dans lequel la boîte-tampon (4 ou 4') est une boîte-tampon (4) standard, ou une boîte-tampon (4') formée par une ou plusieurs demi-coques de tôle ondulée accouplées entre elles au niveau des ailettes (A) ou plans (A) des demi-coques, formant une ou plusieurs cellules, où chaque boîte-tampon (4') est montée avec l'axe de la cellule ou des cellules, de préférence hexagonales, parallèle audit axe longitudinal du composant avant (1'a) d'un longeron avant (1'), ou orthogonalement à cet axe.

5. Le véhicule à moteur selon la revendication 4, **caractérisé en ce que** la liaison entre le composant avant (1'a) d'un longeron avant (1') et la boîte-tampon (4 ou 4') respective est obtenue par le biais d'une plaque et d'une contre-plaque boulonnées, la plaque étant réalisée en pièce unique avec l'extrémité avant du composant avant (1'a) et la contre-plaque étant rigidement reliée à la boîte-tampon (4 ou 4').

6. Le véhicule à moteur selon l'une quelconque des revendications 4-5 précédentes, dans lequel la force critique Fc qui cause le fléchissement de chacun des trois éléments (4 ou 4', 1'a, 1'b) en cas de choc, est obtenue selon la relation suivante :

$$Fc(4 \text{ ou } 4') < Fc(1'a) < Fc(1'b)$$

par conséquent, en cas de choc à une énergie modérément élevée, il suffit de remplacer la structure sacrificielle avant du véhicule, définie par ce qui suit : traverse sacrificielle (3), boîte-tampon (4, 4') et composants avant (1'a) des longerons avant (1') du véhicule à moteur.

FIG.1a

FIG.1b

2b

2a

1'a

1'b

1'

FIG.2a

1

FIG.2b

FIG.3a

FIG.3b

FIG.4

FIG.5

FIG.6

FIG.7

FIG.8

FIG.9

FIG.10

1'a

1'a

"3"

"2"   "1"

# FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0546352 A
- DE 4239460

- EP 1787870 A